# EUROPÄISCHE PATENTSCHRIFT

(11) **EP 3 467 323 B1**
(45) Veröffentlichungstag und Bekanntmachung des Hinweises auf die Patenterteilung: **24.07.2024**
(21) Anmeldenummer: 18203127.8
(22) Anmeldetag: 21.06.2011
(51) Int. Cl.: F16B 5/07, B60R 13/02

(54) **BEFESTIGUNGSSYSTEM**
FASTENING SYSTEM
SYSTÈME DE FIXATION

(30) Priorität: 16.07.2010 DE 102010027394
(43) Veröffentlichungstag der Anmeldung: 10.04.2019
(62) Teilanmeldung aus: 11726714.6
(73) Patentinhaber: Gottlieb Binder GmbH & Co. KG, 71088 Holzgerlingen (DE)
(72) Erfinder: Poulakis, Konstantinos, 71157 Hildrizhausen (DE)
(74) Vertreter: Kohler Schmid Möbus Patentanwälte

(56) Entgegenhaltungen:
- EP-A1- 2 365 156
- WO-A1-2009/097950
- US-A- 5 058 245
- US-A- 5 242 646
- US-A- 5 429 875
- US-A1- 2008 099 639

## Beschreibung

Die Erfindung betrifft ein Befestigungssystem zum wieder lösbaren Festlegen eines zweiten Bauteils an einem ersten Bauteil, wie dem Anbringen eines Abdeckbauteils an einem Karosseriebauteil, gemäß der Merkmalsausgestaltung des Oberbegriffes des Patentanspruches 1.

Ein Befestigungssystem dieser Art ist Stand der Technik, siehe WO 2009/ 097950 A1. Ein solches Befestigungssystem dient unter anderem dazu, flächenartige Verkleidungen an vorgebbaren Stellen festzulegen, beispielsweise um unschön aussehende Stellen zu kaschieren; kann aber auch zur Wärme- und Schallisolation eingesetzt werden. So werden im Kraftfahrzeugbau beispielsweise paneelartige Abdeckbauteile eingesetzt, um Blechteile als Karosseriebauteile großflächig abzudecken. Als Karosseriebauteile können hier beispielsweise Beladetüren angesprochen sein aber auch Karosserieböden und -decken. Neben dem angesprochenen Kraftfahrzeugbereich sind solche Befestigungssysteme auch einsetzbar bei Eisenbahnen, Schiffen und Flugzeugen, wo vergleichbare Aufgabenstellungen zu lösen sind.

Dadurch, dass das Befestigungssystem eine wieder lösbare Verbindung zwischen einem zweiten Bauteil, wie einem Abdeckbauteil, und einem ersten Bauteil, wie einem Drittbauteil, ermöglicht, lassen sich beispielsweise innerhalb des Drittbauteils verlaufende technische Einrichtungen, wie Kabel, Klimakanäle, Steuerelektroniken etc. bei Bedarf gut zugänglich gestalten, indem man eben das Abdeckteil von dem Drittbauteil mit der jeweils technischen Einrichtung entfernt. Dank der Festlegung über zusammenwirkende Haftverschlussteile lassen sich derartige Maßnahmen mit verhältnismäßig geringem Arbeits- und Montageaufwand durchführen.

Gewisse Einschränkungen hinsichtlich der Einsatzmöglichkeiten eines solchen Befestigungssystems sind lediglich in Fällen gegeben, in denen Abdeckbauteile hohen Wärmebelastungen ausgesetzt sind. Dies ist beispielsweise der Fall, wenn das Befestigungssystem für Karosseriebauteile verbaut wird, die beispielsweise im Sommer höheren Temperaturen, beispielsweise durch direkte Sonneneinstrahlung, ausgesetzt sind. Man ist daher gezwungen, die im Stand der Technik vorgesehene Klebstoffverbindung zwischen dem Distanzhalter und Bauteil, wie Karosseriebauteil, entsprechend wärmebeständig auszubilden. Bevorzugt werden diesbezüglich reaktive Klebstoffe, wie feuchtigkeitsvernetzende Polyurethan-Klebstoffe, zum Einsatz gebracht, auch können hochtemperaturbeständige Hotmelt-Klebstoffe, wie Polyamid-Klebstoffe, benutzt werden. Die Handhabung derartiger, verhältnismäßig kostenintensiver Klebstoffe, gestaltet sich verhältnismäßig zeitaufwendig.

Weitere Befestigungssysteme gehen aus der US 5 429 875, der US 5 058 245 und der US 5 242 646 hervor.

Im Hinblick hierauf liegt der Erfindung die Aufgabe zugrunde, ein Befestigungssystem der betrachteten Art zur Verfügung zu stellen, das universeller, also auch in Fällen erhöhter Wärmebelastung, vorteilhaft einsetzbar ist.

Erfindungsgemäß ist diese Aufgabe bei einem Befestigungssystem der eingangs genannten Art dadurch gelöst, dass der Distanzhalter mittels einer das erste Befestigungsmittel bildenden Verschraubung am ersten Bauteil festlegbar ist und dass der Distanzhalter zur Bildung der Verschraubung eine Bohrung aufweist, deren den Verschlusselementen zugewandter Öffnungsrand eine konische Erweiterung aufweist, in der der Kopf einer Senkkopfschraube so aufnehmbar ist, dass sich das obere Ende des Kopfes unterhalb der Verschlusselemente befindet. Unter Beibehaltung der Vorteile, die ein dem Stand der Technik entsprechendes, derartiges Befestigungssystem bietet, ermöglicht die erfindungsgemäß vorgesehene Verschraubung einen sicheren Einsatz auch unter Einsatzbedingungen, bei denen besondere thermische Belastungen auftreten können, ohne dass ein Bedarf an hochtemperaturfesten Klebstoffen besteht.

Bei einer derart "versenkt" ausgebildeten Verschraubung bleibt der gegenseitige Eingriff der korrespondierenden Verschlusselemente von der Verschraubung unbeeinträchtigt.

Das erste Haftverschlussteil kann eine die Trägerlage durchdringende, runde Öffnung korrespondierend zur Bohrung aufweisen.

Bei besonders vorteilhaften Ausführungsbeispielen, bei denen der Distanzhalter aus einem Rahmenteil besteht, das eine rechteckförmige Kastenform hat, sowie eine Rahmenvertiefung zur bündigen Aufnahme einer Trägerlage mit den Verschlusselementen des zugeordneten ersten Haftverschlussteils, ist die Bohrung vorzugsweise im Zentralbereich der Rahmenvertiefung gebildet.

Mit besonderem Vorteil kann die Anordnung hierbei so getroffen sein, dass der Öffnungsrand der Bohrung von einer aus der Fläche der Rahmenvertiefung vorstehenden, zur Bohrung konzentrischen Ringrippe umgeben ist, deren Höhe gleich wie oder geringer ist als die Stärke einer in der Rahmenvertiefung aufnehmbaren Trägerlage der Verschlusselemente. Diese vorstehende Ringrippe kann zur Zentrierung der Trägerlage in eine in der Trägerlage ausgebildete runde Öffnung eingreifen.

Nachstehend ist die Erfindung anhand der Zeichnung erläutert. Dabei zeigen in prinzipieller und nicht maßstäblicher Darstellung die
- Fig. 1: die stirnseitige Ansicht auf eine Beladetür eines Transportbusses;
- Fig. 2: eine stirnseitige Ansicht auf ein Abdeckbauteil, das mittels des Befestigungssystems an der Ladetür nach Fig. 1 zu befestigen ist;
- Fig. 3: in der Art einer Explosionszeichnung die wesentlichen Teile einer Ausführungsform des Befestigungssystems;
- Fig. 4 und 5: eine perspektivische Schrägansicht bzw. Draufsicht auf den gesondert dargestellten Distanzhalter der Ausführungsform von Fig. 3;
- Fig. 6: eine Schnittdarstellung des Distanzhalters mit auf dessen Rahmenvertiefung angebrachtem Haftverschlussteil;
- Fig. 7: einen vergrößert gezeichneten Teilausschnitt des in Fig. 6 mit VII bezeichneten Bezirks;
- Fig. 8: das Gewebebild eines für das Befestigungssystem eingesetzten Haftverschlussteils in Draufsicht; und
- Fig. 9: eine Seitendarstellung auf das flächige Haftverschlussteil nach der Fig. 8.

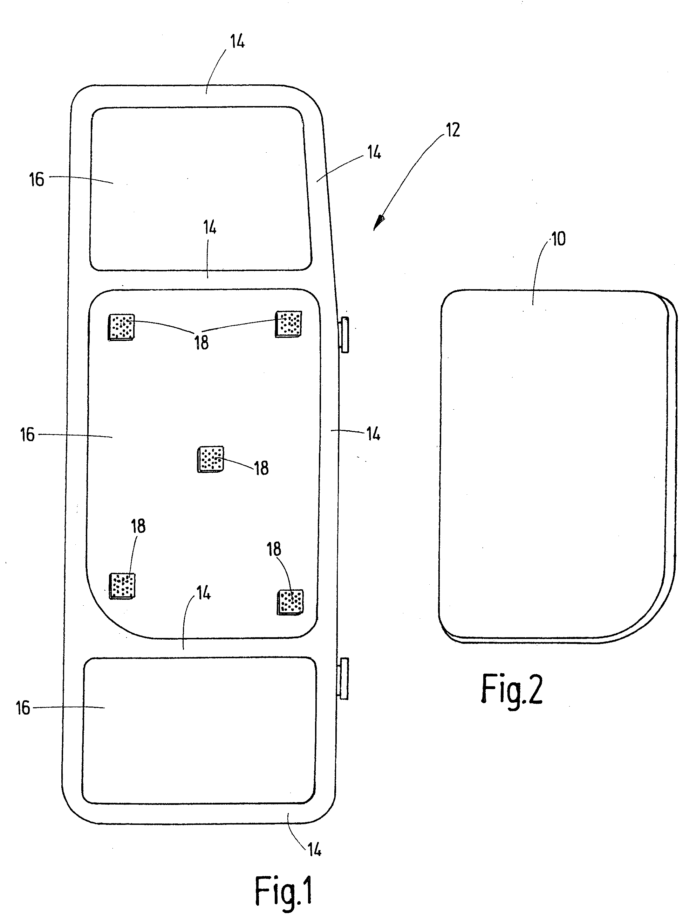

Das Befestigungssystem ist anhand eines in Fig. 1 und 2 gezeigten Ausführungsbeispieles näher erläutert. Das Befestigungssystem dient dem wieder lösbaren Anbringen eines zweiten Bauteils 10, hier eines Abdeckbauteils, beispielsweise ein mehrlagiges Holzpaneel, an einem ersten Bauteil 12, hier einem Karosseriebauteil, beispielsweise in Form der in Fig. 1 gezeigten Beladetür eines Transportbusses. Die dahingehende Tür besteht überwiegend aus Blechbauteilen, wobei einzelne Blechprofile 14 der Tür durch vertiefte Flächen 16 voneinander separiert sind. Die mittlere Fläche 16 dient der Aufnahme des in Fig. 2 gezeigten Abdeckbauteiles 10, indem dieses um eine fiktive Längsachse geklappt so auf das Karosseriebauteil 12 gelegt wird, dass die in Fig. 1 aufgezeigten Befestigungsteile 18 nicht mehr sichtbar sind, sondern vielmehr die rückwärtige, durchgehende Fläche des Abdeckbauteiles 10.

Anstelle der in Fig. 1 gezeigten fünf Befestigungsteile 18 können selbstredend in Abhängigkeit von der Ausgestaltung des jeweiligen Abdeckbauteiles 10 auch mehr oder weniger Befestigungsteile 18 zum Einsatz kommen. Vergleichbar zu den Flächen 16 zugeschnittene Abdeckbauteile 10 können vergleichbar in die obere und untere Fläche 16 der Blechtür eingesetzt werden, was der Einfachheit halber jedoch nicht dargestellt ist.

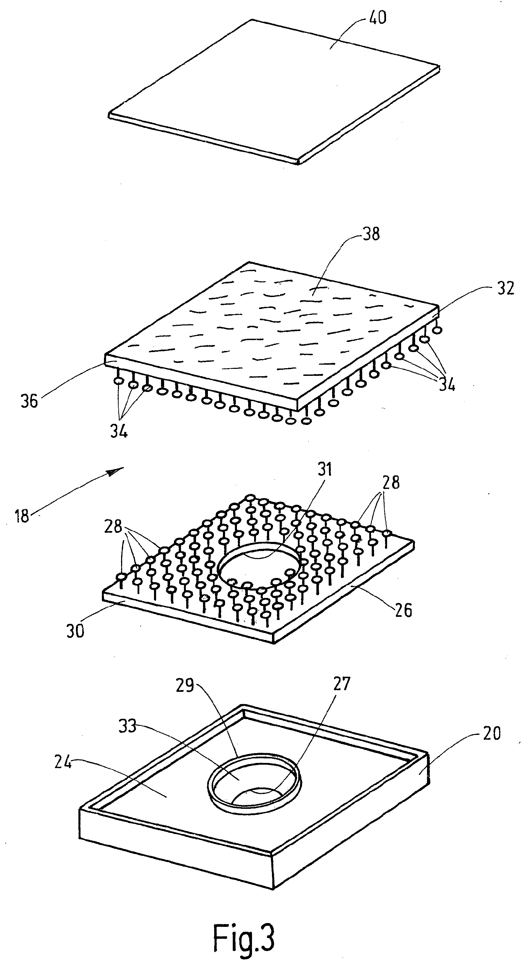

Die Fig. 3 zeigt ein Befestigungsteil 18 als Ganzes. Dieses ist in der Art eines Verbundes aus Einzelkomponenten aufgebaut, beginnend mit einem Distanzhalter 20. Dieser ist vorzugsweise in der Art eines Spritzgussteiles ausgebildet und besteht beispielsweise aus Polyamid-6-Material. Der Distanzhalter 20 hat eine rechteckförmige Kastenform mit einer Rahmenvertiefung 24 zur bündigen Aufnahme einer Trägerlage 26 mit den pilzkopfartigen Verschlusselementen 28 eines ersten Haftverschlussteils 30. Von der Baugröße her korrespondierend ist darüber angeordnet innerhalb des Verbundes ein zweites Haftverschlussteil 32 vorhanden, das in Blickrichtung auf die Fig. 3 gesehen auf seiner Unterseite gleichfalls pilzkopfartige Verschlusselemente 34 trägt, die entsprechend den Verschlusselementen 28 ausgebildet sind. Mithin können die Pilzköpfe 34 des zweiten Haftverschlussteils 32 in die von den Pilzköpfen 28 des ersten Haftverschlussteils 30 gebildeten Abstände in wieder lösbarer Weise zum Herstellen eines Haftverschlusses als Ganzes eingreifen. Die jeweiligen Pilzköpfe der genannten Verschlusselemente 28, 34 sind über Stengel oder Stiele mit der jeweiligen Trägerlage verbunden, wobei die Trägerlage des zweiten Haftverschlussteils 32 mit 36 bezeichnet ist.

Auf der Rückseite des zweiten Haftverschlussteils 32 ist ein zweites Befestigungsmittel 38 vorhanden, in Form eines Klebstoffes. Ein hierbei besonders bevorzugt zum Einsatz kommender Klebstoff ist ein drucksensitiver Klebstoff auf Acrylatbasis oder ein sogenannter Kunstkautschuk-Klebstoff. Zum Schutz der in Blickrichtung auf die Fig. 3 gesehen oberen Klebstoffschicht 38 ist eine abziehbare Schutzfolie 40 vorhanden, vorzugsweise in Form einer Polyethylenfolie.

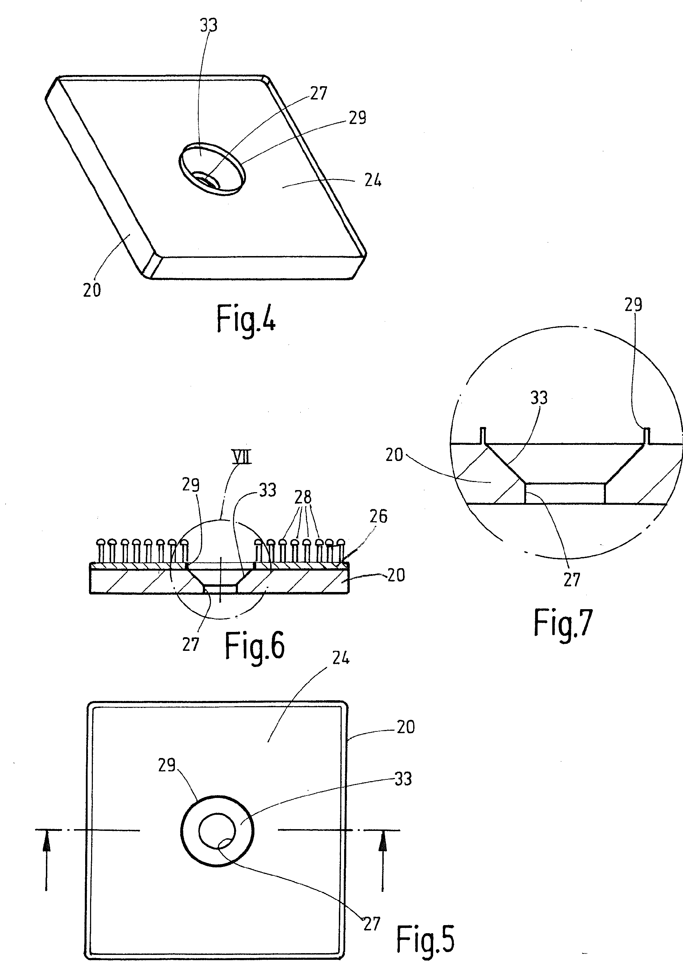

Der Verbund von Distanzhalter 20 mit den beiden Haftverschlussteilen 30 und 32 zusammen mit der Schutzfolie 40 bilden ein Befestigungsteil 18 nach der Fig. 1 aus. Dieser, die Befestigungsteile 18 bildende Verbund ist durch Verschrauben mit dem Karosseriebauteil 12 fest in der Weise verbunden, dass die Unterseite des Distanzhalters 20 an der in Blickrichtung auf die Fig. 1 gesehenen Oberseite der Fläche 16 des Karosseriebauteils 12 als erstes Bauteil anliegt. Entfernt man nun die Schutzfolie 40 von dem jeweiligen Verbund, lässt sich das Abdeckbauteil 10 als zweites Bauteil in Längsrichtung um 180° geklappt, an den Befestigungsteilen 18 an der Innenseite der Tür definiert festlegen. Die nähere Gestaltung der Verschraubung zur Festlegung des Distanzhalters 20 am Karosseriebauteil 12 wird unten anhand der Fig. 4 bis 7 näher erläutert.

Will man nun das Abdeckbauteil 10 vom Karosseriebauteil 12 lösen, zieht man das Abdeckbauteil 10 entsprechend von der Fläche 16 der Tür ab, wobei dann der Distanzhalter 20 und das erste Haftverschlussteil 30 an dem Karosseriebauteil 12 (Tür) als erstes Bauteil verbleiben, wohingegen das korrespondierende zweite Haftverschlussteil 32 am Abdeckbauteil 10 als zweites Bauteil verbleibt. Bei abgenommenem Abdeckbauteil 10 können dann entsprechende Wartungsarbeiten an der Tür vorgenommen werden. Im übrigen ist das erste Haftverschlussteil 30 unverlierbar mittels eines nicht näher dargestellten Klebstoffes in der Rahmenvertiefung 24 des Distanzhalters 20 festgelegt, der vorzugsweise eine quadratische Querschnittsform aufweist.

Wie aus den Fig. 3 bis 7 erkennbar, weist der Distanzhalter 20 zur Bildung der Verschraubung im Zentralbereich der Rahmenvertiefung eine Bohrung 27 auf, deren den Verschlusselementen 28 zugewandter Öffnungsrand eine konische Erweiterung 33 als Sitz für den Kopf einer (nicht dargestellten) Senkkopfschraube bildet. In Anpassung an Form und Abmessung des nicht dargestellten Kopfes der Senkkopfschraube ist die konische Erweiterung 33 so gestaltet, dass der Kopf sich unterhalb der Verschlusselemente 28 befindet, vorzugsweise nicht über die Trägerlage 26 vorsteht. Somit wird der Verhakungseingriff durch die Senkkopfschraube nicht behindert. Wie insbesondere den Fig. 3, 4 und 7 deutlich entnehmbar ist, kann der Öffnungsrand der Bohrung 27 am Ende der Erweiterung 33 von einer konzentrischen Ringrippe 29 eingefasst sein, die aus der Fläche der Rahmenvertiefung 24 um eine Strecke vorsteht, die im Wesentlichen der Stärke der Trägerlage 26 entspricht, siehe Fig. 6. Bei auf der Fläche der Rahmenvertiefung 24 aufliegender Trägerlage 26 erstreckt sich die Ringrippe 29 zentrierend in eine Öffnung 31, die in der Trägerlage 26 mit einem den Außendurchmesser der Ringrippe 29 geringfügig übersteigenden Durchmesser ausgebildet ist. Der Distanzhalter 20 kann aber auch ohne die Ringrippe 29 ausgebildet werden.

Die jeweiligen Distanzhalter 20 lassen sich in der Bauhöhe unterschiedlich gestalten, um dergestalt ungleiche Baumaße, beispielsweise innerhalb des Karosseriebauteiles 12, ausgleichen zu können. Um eine vereinfachte Montage vor Ort sicherstellen zu können, können unterschiedliche Gruppen von Distanzhaltern 20 derart eingefärbt sein, dass eine Bauart beispielsweise mit der größeren Höhe blau eingefärbt ist und andere Distanzhalter 20 dann eine andere Farbe, beispielsweise grün, aufweisen.

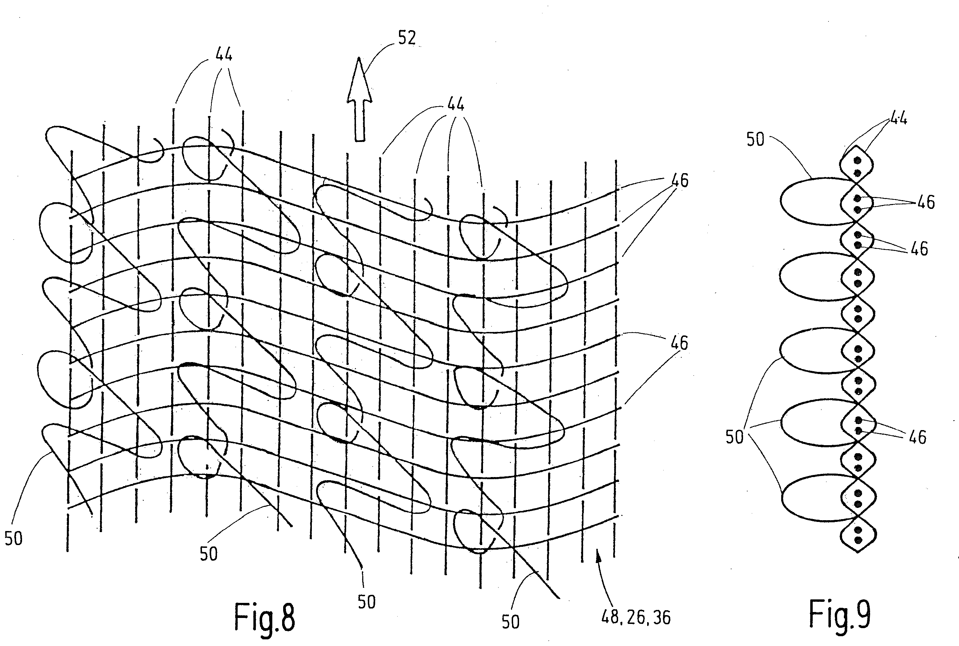

Die in Fig. 3 dargestellten beiden Haftverschlussteile 30,32 lassen sich beispielsweise dadurch ausgestalten, dass man in eine plattenartige Trägerstruktur und mithin in die Trägerlage 26 stielartige Festlegeteile von der Rückseite her in hierfür vorgesehene Bohrungen einschießt, die in der Art eines krampenförmigen oder U-förmigen Festlegeelementes ausgebildet sind. Zur Bildung der pilzkopfartigen Verschlusselemente 28, 34 werden dann die freien, aus der Trägerlage 26 vorstehenden Stielenden der stielartigen Festlegeelemente wärmebehandelt und/oder mechanisch umgeformt und derart die charakteristische Kopfform erzielt. Auch können einzelne Stielelemente über eine aus der Computertechnik bekannte Beschickungsmaschine von der jeweils freien Stirnseite in entsprechende Ausnehmungen (Bohrungen) in der jeweiligen Trägerlage 26,36 in diese eingesetzt werden, wobei die dahingehende Verbindung wiederum über einen entsprechenden Klebstoffauftrag erfolgen kann. Die pilzkopfartigen Verdickungen am freien Ende des jeweiligen Stengelteils erreicht man dann wiederum über ein bevorzugtes Wärmebehandlungs- oder mechanisches Umformverfahren. Ein bevorzugtes Verfahren zum Erhalt des entsprechenden Haftverschlussteils 30 und/oder 32 gibt jedoch die Ausführungsform nach den Fig. 8 und 9 wieder.

Die Fig. 8 zeigt ausschnittsweise eine Draufsicht auf ein flächenförmiges Haftverschlussteil 30 bzw. 32. Das Haftverschlussteil 30,32 lässt sich innerhalb der Bildebene sowohl in der einen wie auch in der anderen Bildrichtung beliebig verlängern und die geometrischen Abmessungen des Flächengebildes sind abhängig von den Vorgaben der Webeinrichtung, auf der das Haftverschlussteil 30,32 gefertigt wird. Das jeweilige Haftverschlussteil 30,32 besteht bei der vorliegenden Ausführungsform aus Kettfäden 44 und Schussfäden 46, die in Queranordnung miteinander verwebt das Grundgewebe 48 für das Haftverschlussteil 30,32 bilden. Das dahingehende Grundgewebe 48 bildet dann insoweit die jeweilige Trägerlage 26 bzw. 36 aus. Des Weiteren ist das Grundgewebe 48 mit sog. Funktionsfäden 50 in der Art von Polfäden ausgebildet. Der jeweilige Funktionsfaden 50 bildet dann für das flächenförmige Haftverschlussteil später die einzelnen pilzkopfartigen Verschlusselemente 28,34 aus. Um die pilzkopfartigen Verschlusselemente 28,34 zu erhalten, sind gemäß Darstellung nach der Fig. 9 dann die Polfäden 50 an ihrem oberen Bogen jeweils aufzutrennen und durch entsprechende Erwärmung formen sich die freien Stengelenden zu den gewünschten pilzförmigen Verschlusselementen 28,34 um. Dergestalt entstehen dann die in Fig. 3 aufgezeigten Verschlusselemente.

Des Weiteren ist in Blickrichtung auf die Fig. 8 gesehen auf ihrer Oberseite mit einem Pfeil 52 die Produktionsrichtung für das jeweilige Haftverschlussteil 30,32 wiedergegeben. Bei der gezeigten Anordnung nach der Fig. 8 sind die jeweiligen Schussfäden 46 in der Art einer Sinus- oder Kosinuswelle bogenförmig ausgebildet und an den Kreuzungsstellen zwischen Kettfäden 44 und Schussfäden 46 verlaufen die Kettfäden 44 parallel zur Produktionsrichtung 52 sowie parallel zueinander in geradliniger Anordnung. Anstelle der Sinus- oder Kosinuswelle können aber auch die Schussfäden 46 in geradliniger Form angeordnet sein, was die Produktion erleichtern hilft; allein mit der Wellen- oder Bogenform ist die in einer Richtung verlaufende lineare Orientierung an Verschlusselementen 28,34 des Haftverschlusses vermieden und eine bogenförmige, sinusartige Anordnung bringt einen definierten Widerstand der Außer-Eingriff-Bewegung der korrespondierenden Verschlusselemente 28,34 entgegen, so dass dergestalt die Haltekräfte im wesentlichen konstant und derart auch berechenbar sind.

Aus dem derart hergestellten Flächenverbund lassen sich die einzelnen Verschlussteile 30,32 ausschneiden, oder das Webverfahren ist derart ausgelegt, dass gleich die benötigte quadratische Grundform erreicht ist. Anstelle des aufgezeigten Webverfahrens kann der vorgestellte Verschluss auch in gestrickter Form vorliegen.

Es versteht sich, dass, anders als hier in Fig. 1 und 2 beispielhaft dargestellt, die Befestigungsteile 18 mit den Distanzhaltern 20 am Abdeckbauteil 10 als erstes Bauteil durch Verschrauben fest angebracht sein könnten, wobei die Haftverschlussteile 32 seitens des Karosseriebauteils 12 als zweites Bauteil vorgesehen wären.

## Patentansprüche

1. Befestigungssystem zum wieder lösbaren Festlegen eines zweiten Bauteils (10) an einem ersten Bauteil (12), wie dem Anbringen eines Abdeckbauteils an einem Karossseriebauteil, mit einem ersten Haftverschlussteil (30) und einem korrespondierenden zweiten Haftverschlussteil (32) und mindestens einem Distanzhalter (20), der an seiner einen Seite mittels eines ersten Befestigungsmittels am ersten Bauteil (10) festlegbar ist und auf seiner gegenüberliegenden Seite mit dem ersten Haftverschlussteil (30), bestehend aus einer Trägerlage (26) mit Verschlusselementen (28), versehen ist, das mit dem korrespondierenden zweiten Haftverschlussteil (32) wieder lösbar in Eingriff bringbar ist, das auf seiner den Verschlusselementen (28, 34) abgewandten Seite mittels eines zweiten Befestigungsmittels (38) am zweiten Bauteil (12) festlegbar ist, wobei die jeweiligen Verschlusselemente (28, 34) von erstem Haftverschlussteil (30) und korrespondierendem zweiten Haftverschlussteil (32) pilzkopfartig ausgebildet sind, wobei die Pilzköpfe des ersten Haftverschlussteils (30) in die von den Pilzköpfen des zweiten Haftverschlussteils (32) gebildeten Abstände wieder lösbar eingreifen, wobei auf der Rückseite des zweiten Haftverschlussteils (32) ein zweites Befestigungsmittel (38) in Form eines Klebstoffes vorhanden ist, und wobei zum Schutz dieser Klebstoffschicht (38) eine abziehbare Schutzfolie (40) dient, **dadurch gekennzeichnet, dass** der Distanzhalter (20) mittels einer das erste Befestigungsmittel bildenden Verschraubung am ersten Bauteil (10) festlegbar ist und dass der Distanzhalter (20) zur Bildung der Verschraubung eine Bohrung (27) aufweist, deren den Verschlusselementen (28) zugewandter Öffnungsrand eine konische Erweiterung (33) aufweist, in der der Kopf einer Senkkopfschraube so aufnehmbar ist, dass sich das obere Ende des Kopfes unterhalb der Verschlusselemente (28) befindet.

2. Befestigungssystem nach Anspruch 1, **dadurch gekennzeichnet, dass** der Distanzhalter (20) aus einem Rahmenteil besteht, das eine rechteckförmige Kastenform hat, mit einer Rahmenvertiefung (24) zur bündigen Aufnahme einer Trägerlage (26) mit den Verschlusselementen (28) des ersten Haftverschlussteils (30), und dass die Bohrung (27) im Zentralbereich der Rahmenvertiefung (24) gebildet ist.

3. Befestigungssystem nach Anspruch 1 oder 2, **dadurch gekennzeichnet, dass** der Öffnungsrand der Bohrung (27) von einer aus der Fläche der Rahmenvertiefung (24) vorstehenden, zur Bohrung (27) konzentrischen Ringrippe (29) umgeben ist, deren Höhe gleich wie oder geringer ist als die Stärke einer in der Rahmenvertiefung (24) aufnehmbaren Trägerlage (26) der Verschlusselemente (28).

4. Befestigungssystem nach einem der Ansprüche 1 bis 3, **dadurch gekennzeichnet, dass** das erste Haftverschlussteil (30) eine die Trägerlage (26) durchdringende, runde Öffnung (31) korrespondierend zur Bohrung (27) aufweist, in der vorzugsweise die Ringrippe (29) am Öffnungsrand der Bohrung (27) zentrierend aufnehmbar ist.

## Claims

1. A fastening system for releasably fixing a second component (10) on a first component (12), such as attaching a covering component to a component of a vehicle body, having a first touch-and-close fastener part (30) and a corresponding second touch-and-close fastener part (32) and at least one spacer (20), which can be fixed on its one side on the first component (10) by means of a first fastening means and is provided on its opposite side with the first touch-and-close fastener part (30), consisting of a substrate layer (26) with fastener elements (28), which can be brought into releasable engagement with the corresponding second touch-and-close fastener part (32) which, on its side which faces away from the fastener elements (28, 34), can be fixed on the second component (12) by means of a second fastening means (38), wherein the respective fastener elements (28, 34) of the first touch-and-close fastener part (30) and corresponding second touch-and-close fastener part (32) are formed as mushroom heads, wherein the mushroom heads of the first touch-and-close fastener part (30) releasably mesh with the spaces formed by the mushroom heads of the second touch-and-close fastener part (32), wherein on the rear side of the second touch-and-close fastener part (32) a second fastening means (38) in the form of an adhesive is provided, and wherein a removable protective foil (40) is used as protection for this adhesive layer (38), **characterized in that** the spacer (20) can be fixed on the first component (10) by means of a screw connection which forms the first fastening means and **in that** the spacer (20) has a drilled hole (27) for forming the screw connection, with this drilled hole having an opening edge, which faces the fastener elements (28) and has a conical expansion (33) in which the head of a countersunk head screw can be received in such a way that the upper end of the head is located below the fastener elements (28).

2. The fastening system according to claim 1, **characterized in that** the spacer (20) consists of a frame part, which has a rectangular box shape, with a frame depression (24) for the flush reception of a substrate layer (26) with the fastener elements (28) of the first touch-and-close fastener part (30), and that the drilled hole (27) is formed in the central region of the frame depression (24).

3. The fastening system according to claim 1 or 2, **characterized in that** the opening edge of the drilled hole (27) is surrounded by an annular rib (29), which projects from the surface of the frame depression (24) and is concentric to the drilled hole (27), with the height of said annular rib being equal to or less than the thickness of a substrate layer (26) of the fastener elements (28), said substrate layer being receivable in the frame depression (24).

4. The fastening system according to one of claims 1 to 3, **characterized in that** the first touch-and-close fastener part (30) has a round opening (31) corresponding to the drilled hole (27), which penetrates the substrate layer (26), in which the annular rib (29) can preferably be received in a centering manner at the opening edge of the drilled hole (27).

## Revendications

1. Système de fixation dévolu à l'assujettissement libérable d'une seconde pièce structurelle (10) à une première pièce structurelle (12), tel que la mise en place d'une pièce structurelle de recouvrement sur une pièce structurelle d'une carrosserie, comprenant une première partie (30) de fermeture par adhérence, une seconde partie concordante (32) de fermeture par adhérence, et au moins un organe d'espacement (20) pouvant être assujetti à la première pièce structurelle (12) par l'une de ses faces, à l'aide d'un premier moyen de fixation, et muni, sur sa face tournée à l'opposé, de la première partie (30) de fermeture par adhérence qui est constituée d'une couche de support (26) pourvue d'éléments de fermeture (28) et qui peut être mise en prise dissociable avec la seconde partie concordante (32) de fermeture par adhérence, laquelle peut être assujettie à la seconde pièce structurelle (10) à l'aide d'un second moyen de fixation (38), sur sa face pointant à l'opposée des éléments de fermeture (28, 34), sachant que les éléments respectifs de fermeture (28, 34) de la première partie (30) de fermeture par adhérence, et de la seconde partie concordante (32) de fermeture par adhérence, sont réalisés à la manière de têtes de champignons, les têtes de champignons de ladite première partie (30) de fermeture par adhérence pénétrant alors, amoviblement, dans les interstices formés par les têtes de champignons de ladite seconde partie (32) de fermeture par adhérence, sachant qu'un second moyen de fixation (38), revêtant la forme d'un adhésif, est présent sur la face postérieure de ladite seconde partie (32) de fermeture par adhérence, et sachant qu'un film protecteur (40) arrachable sert à la protection de cette couche d'adhésif (38), **caractérisé par le fait que** l'organe d'espacement (20) peut être assujetti à la première pièce structurelle (12) à l'aide d'une solidarisation par vissage matérialisant le premier moyen de fixation ; et **par le fait que**, pour instaurer ladite solidarisation par vissage, ledit organe d'espacement (20) comporte un perçage (27) dont le bord de l'ouverture, tourné vers les éléments de fermeture (28), est doté d'un élargissement tronconique (33) dans lequel la tête d'une vis à tête fraisée peut être reçue de façon telle que l'extrémité supérieure de ladite tête se trouve au-dessous desdits éléments de fermeture (28).

2. Système de fixation selon la revendication 1, **caractérisé par le fait que** l'organe d'espacement (20) est constitué d'une partie d'encadrement revêtant la forme d'un caisson rectangulaire présentant, dans l'encadrement, une zone encaissée (24) qui est conçue pour recevoir, de manière affleurante, une couche de support (26) associée aux éléments de fermeture (28) de la première partie (30) de fermeture par adhérence ; et **par le fait que** le perçage (27) est pratiqué dans la région centrale de ladite zone (24) encaissée dans l'encadrement.

3. Système de fixation selon la revendication 1 ou 2, **caractérisé par le fait que** le bord de l'ouverture du perçage (27) est entouré par une nervure annulaire (29) concentrique audit perçage (27), faisant saillie au-delà de la surface de la zone (24) encaissée dans l'encadrement, et dont la hauteur est égale ou inférieure à l'épaisseur d'une couche (26) de support des éléments de fermeture (28) qui peut être reçue dans ladite zone (24) encaissée dans l'encadrement.

4. Système de fixation selon l'une des revendications 1 à 3, **caractérisé par le fait que** la première partie (30) de fermeture par adhérence présente une ouverture circulaire (31) qui coïncide avec le perçage (27), traverse la couche de support (26) et dans laquelle la nervure annulaire (29), située sur le bord de l'ouverture dudit perçage (27), peut être préférentiellement reçue avec effet de centrage.
